# EUROPEAN PATENT SPECIFICATION

(11) **EP 2 802 154 B1**
(45) Date of publication and mention of the grant of the patent: **09.08.2017**
(21) Application number: 14153128.5
(22) Date of filing: 29.01.2014
(51) Int. Cl.: H04R 1/02

(54) **Built-in audio apparatus**
Eingebautes Audiogerät
Appareil audio intégré

(30) Priority: 10.05.2013 KR 20130052913
(43) Date of publication of application: 12.11.2014
(73) Proprietor: Samsung Electronics Co., Ltd., Gyeonggi-do 443-742 (KR)
(72) Inventor: Lee, Seung-chan, Seoul (KR); Kim, Ki-soo, Gyeonggi-do (KR)
(74) Representative: Appleyard Lees IP LLP

(56) References cited:
- WO-A1-2012/062888
- DE-A1-102006 015 803
- DE-U1-202008 017 374
- US-A1- 2008 130 938
- US-B1- 6 741 720

## Description

### BACKGROUND

### 1. Field

Apparatuses and methods consistent with exemplary embodiments relate to an audio apparatus, and more particularly, to an audio apparatus which is configured to be built-in a structure such as a wall.

### 2. Description of the Related Art

Speakers may be installed in a built-in state and may be used in various places such a variety of multimedia devices, vehicles, or walls of buildings.

Speakers installed in walls or ceilings inside a building usually are used for a floor broadcasting system. In this case, the speakers usually remain in a state fixed to the wall or ceiling, and audio signals are output from a separate broadcast device and transmitted to the speakers connected through wiring or wirelessly.

These built-in type of speakers are components that serve to output sound transmitted from, and are dependent on, the separate broadcast device (e.g. an audio apparatus that can play back audio data), and thus operations, such as the speakers themselves play back audio data, etc., are not possible.

WO2012/062888A1 discloses a household appliance comprising a speaker.

### SUMMARY

According to an aspect of an exemplary embodiment, there is provided a built-in audio apparatus including a speaker unit, a mode setting unit configured to selectively set the speaker unit to one of a first position and a second position, and a controller configured to control the speaker unit depending on the setting of one of the first position and the second position, wherein the mode setting unit is configured to be disposed in a surface of a structure, and includes an opening for emitting sound outputted from the speaker unit.

The speaker unit may be disposed inside the mode setting unit, and wherein the speaker unit maybe configured to move to the first position or the second position as the mode setting unit is rotated by a predetermined angle.

The mode setting unit may include a power switch configured to block power to the controller in the first position and apply power to the controller in the second position.

The opening may be concealed within the structure in the first position and exposed outside the structure in the second position.

The speaker unit may be a flat-type speaker.

The built-in audio apparatus may further include a volume adjusting unit that is disposed inside the mode setting unit, and is electrically connected to the controller in order to control a volume of the speaker unit.

The volume adjusting unit may include a touch sensor disposed on an inner surface of the mode setting unit.

The mode setting unit may further include a lighting unit including a lighting source that is disposed inside the mode setting unit and is electrically connected to the controller, and a window that is connected to the mode setting unit and is formed of a transparent or semitransparent material configured to radiate light emitted from the lighting source.

The lighting unit may further include a light guide plate that is disposed adjacent to the lighting source inside the mode setting unit, and is configured to guide the light emitted from the lighting source to the window.

The controller may be configured to drive the lighting source in the first position and the second position to emit light.

The controller may be electrically connected to a first communication unit, wherein the first communication unit may be configured to communicate with a second communication unit of a sound source providing unit storing audio data, wherein the sound source providing unit may be configured to transmit the audio data, using the second communication unit, to the first communication unit in response to a request by the controller, and wherein the controller may be configured to output the audio data received through the first communication unit using the speaker unit.

The first communication unit and the second communication unit may be configured to transmit wireless signals to and receive wireless signals from each other.

The mode setting unit may be formed in any one of a circular shape, an oval shape, and a polygonal shape.

The built-in audio apparatus may further include a separate speaker spaced at a distance from the built-in audio apparatus, wherein the controller is electrically connected to the separate speaker, and wherein the controller is configured to output sound through the separate speaker when the mode setting unit is in the second position.

According to an aspect of another exemplary embodiment, there is provided a built-in audio apparatus including a mode setting unit that is disposed in a surface of a structure and configured to selectively set a speaker unit arranged inside the mode setting unit in a first position or a second position, wherein the mode setting unit includes an opening for emitting sound outputted from the speaker unit outside the mode setting unit, a controller that is configured to only receive power in the second position and control the output of the speaker unit, a first communication unit electrically connected to the controller, and a sound source providing unit that includes a second communication unit configured to transmit and receive signals to and from the first communication unit, wherein the sound source providing unit is configured to store audio data, and transmit the audio data, via the second communication unit, to the first communication unit in response to a request from the controller, wherein the opening is concealed within the structure in the first position, and exposed outside the structure in the second position, and wherein the controller is further configured to output the audio data received through the first communication unit to the speaker unit.

The speaker unit may be a flat-type speaker.

The built-in audio apparatus may further include a touch sensor configured to adjust a volume of the speaker unit, wherein the touch sensor is disposed on an inner surface of the mode setting unit and is electrically connected to the controller.

The controller may be configured to be electrically connected to a lighting device inside a building, and wherein the controller may be configured to turn on or off the lighting device along with the speaker unit depending on whether the mode setting unit is in the first position or the second position, respectively.

The controller may be electrically connected to a separate speaker spaced at a distance from the built-in audio apparatus, and wherein the controller maybe configured to output sound through the separate speaker depending on whether the mode setting unit is in the second position.

### BRIEF DESCRIPTION OF THE DRAWINGS

The above and/or other aspects will become apparent and more readily appreciated from the following description of exemplary embodiments, taken in conjunction with the accompanying drawings of which:
FIG. 1 is a block diagram illustrating a built-in audio apparatus according to an exemplary embodiment;
FIG. 2 is a perspective view illustrating a built-in audio apparatus in an off state according to an exemplary embodiment;
FIG. 3 is a sectional view along a line III - III as shown in FIG. 2 illustrating a built-in audio apparatus in an off state according to an exemplary embodiment;
FIG. 4 is a perspective view illustrating a built-in audio apparatus in an on state according to an exemplary embodiment;
FIG. 5 is a sectional view along a line V - V as shown in FIG. 4 illustrating a built-in audio apparatus in an on state according to an exemplary embodiment;
FIG. 6 is a perspective cutaway view along a line V - V as shown in FIG. 4 illustrating a built-in audio apparatus in an on state according to an exemplary embodiment;
FIG. 7 is a front view illustrating first and second lighting units of a built-in audio apparatus according to an exemplary embodiment;
FIG. 8 is a front view illustrating a mode setting unit and a volume adjusting unit, which are implemented by a single touch sensor, of a built-in audio apparatus according to an exemplary embodiment; and
FIG. 9 is a block diagram illustrating a built-in audio apparatus according to another exemplary embodiment.

### DETAILED DESCRIPTION OF THE EXEMPLARY EMBODIMENTS

Hereinafter, certain exemplary embodiments of the present disclosure will be described in detail with reference to the accompanying drawings.

The matters defined herein, such as a detailed construction and elements thereof, are provided to assist in a comprehensive understanding of this description. Thus, it is apparent that exemplary embodiments may be carried out without those defined matters. Also, well-known functions or constructions are omitted to provide a clear and concise description of exemplary embodiments. Further, dimensions of various elements in the accompanying drawings may be arbitrarily increased or decreased for assisting in a comprehensive understanding. Throughout the drawings, like reference numerals will be understood to refer to like parts, components and structures.

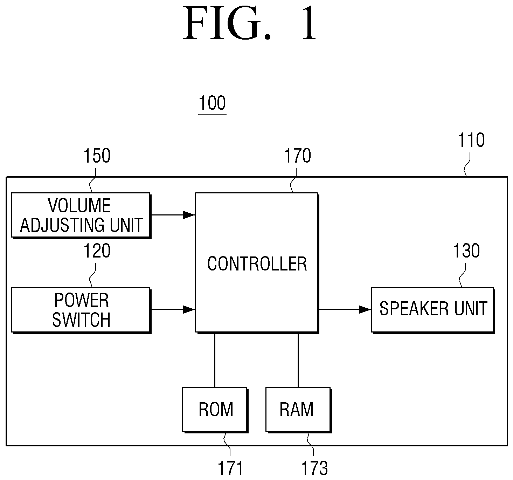

Referring to FIG. 1, a built-in audio apparatus 100 according to an exemplary embodiment may be installed so that a portion of the built-in audio apparatus 100 is buried in a structure, e.g., a wall of a building. In detail, the built-in audio apparatus 100 may be formed as a seesaw type of switch for turning on/off lighting. The built-in audio apparatus 100 includes a mode setting unit 110, a speaker unit 130, a volume adjusting unit 150, and a controller 170.

According to an exemplary embodiment, the built-in audio apparatus may be a wall mountable audio switch. Further, the wall mountable audio switch may include a rocker switch, which is also known as a decorator switch, or may at least have a similar shape to a rocker switch. Further the rocker switch shaped built-in audio apparatus may include a speaker within the rocker switch shaped portion along with also having a controller and a memory unit.

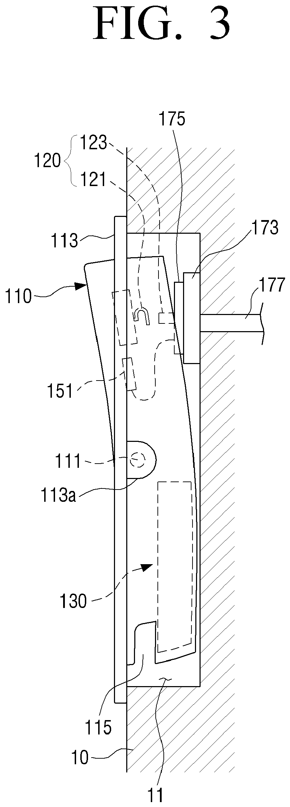

Referring to FIG. 3, a rear portion of the mode setting unit 110 may be buried in a receiving groove 11 formed in the wall 10, and hinge protrusions 111 projecting from opposite sides of the mode setting unit 110 may be hinge-connected to a supporting frame 113.

The supporting frame 113 may be formed in a loop shape along a perimeter of the mode setting unit 110, and may be fixed to the wall 10. In this case, the inner circumferential surface of the supporting frame 113 and the outer circumferential surface of the mode setting unit 110 may be formed to maintain a predetermined gap so that when the mode setting unit 110 rotates on the hinge protrusions 111 in one direction or in the other direction, the supporting frame 113 does not interfere with the rotating operation of the mode setting unit 110.

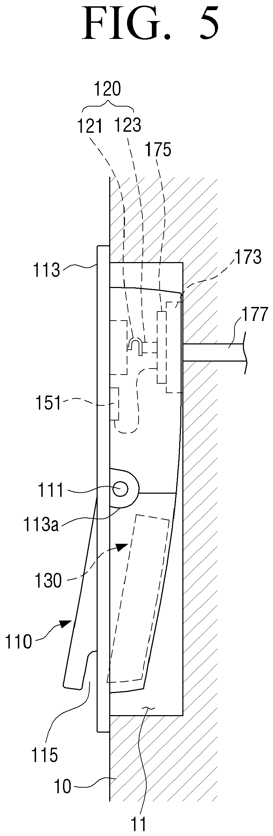

The speaker unit 130 may be disposed inside the mode setting unit 110. The speaker unit 130 may be selectively set in a first (off) position (see FIG. 3) or a second (on) position (see FIG. 5) by the operation (a seesaw operation) of the mode setting unit 110 that rotates in one (upward or upper) direction or another (downward or lower) direction.

In each of a first and second positions, two kinds of operations may be carried out together. For example, in the first position, a power switch 120 may be spaced apart, and an opening 115 formed on a bottom surface of the mode setting unit 110 may be concealed inside the wall 10. In the second position, the power switch 120 may be connected so that power is applied to the controller, and the opening 115 of the mode setting unit 110 comes out from the wall 10 and is exposed to the outside of the wall 10.

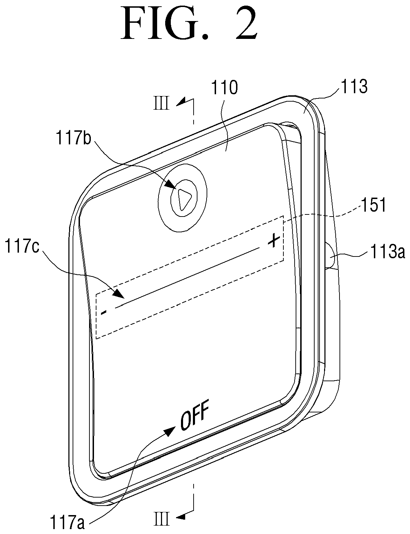

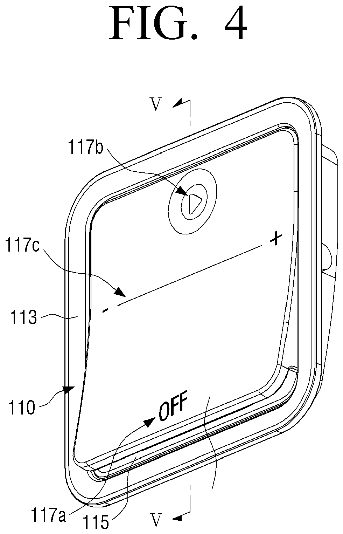

The mode setting unit 110 may be bent so that an upper portion and a lower portion of the mode setting unit 110 maintain a predetermined angle (e.g. an obtuse angle) between each other. Accordingly, in the first position, the upper portion of the mode setting unit 110 projects from the wall 10, and the lower portion of the mode setting unit 110 enters the receiving groove 11 of the wall 10, thereby becoming approximately level or flush with the wall 10 (see FIGS. 2 and 3). On the contrary, in the second position, the upper portion of the mode setting unit 110 enters the receiving groove 11 of the wall 10 so as to become approximately level or flush with the wall 10, and the lower portion of the mode setting unit 110 projects from the wall 10 (see FIGS. 4 and 5).

When the opening 115 is exposed outside the wall 10 in the second position, sound outputted from the speaker unit 130 may be emitted through the opening 115 of the mode setting unit 110. The opening 115 may be formed in a slit shape of a predetermined length along the bottom surface of the mode setting unit 110. In this case, a grill having a plurality of small holes may be disposed in the opening 115 in order to prevent foreign materials from entering the inside of the mode setting unit 110.

Referring to FIG. 2, first, second, and third marks 117a, 117b, and 117c may be formed at intervals on a front surface of the mode setting unit 110.

The first mark 117a may be positioned near a bottom end of the front surface of the mode setting unit 110, and may be formed as "OFF" of a character that means an off mode of the built-in audio apparatus 100 (in detail, in a state where the power switch 120 is spaced apart).

The second mark 117b may be positioned near a top end of the front surface of the mode setting unit 110, and may be formed as a figure that means an on mode of the built-in audio apparatus 100 (in detail, in a state where the power switch 120 is connected to and the speaker unit 130 outputs sound).

The third mark 117c may be positioned between the first mark 117a and the second mark 117b, and may be formed as a symbol or a figure that represents volume adjustment of the speaker unit 130. The third mark 117c includes a "-" symbol that means to reduce the volume on the left, a "+"symbol that means to increase the volume on the right, and a straight line between the "-" symbol and the "+"symbol. The third mark 117c is not limited to the above-mentioned configuration, and may be formed as a symbol, a figure, or a mixture of symbols and figures for an intuitive sign meaning that a user can adjust the volume of the speaker unit 130 by a touch and sliding method.

In an exemplary embodiment, the mode setting unit 110 may rotate in upper and lower directions. However, the rotating direction of the mode setting unit 110 is not limited thereto. It is also possible to configure that the mode setting unit 110 rotates in left and right directions according to another exemplary embodiment.

Also, as shown in FIGS. 3 and 5, a portion of the power switch 120 may be arranged inside the upper portion of the mode setting unit 110. The power switch 120 includes a first terminal 121, and a second terminal 123 and a certain switching circuit which are disposed on a printed circuit board 175. In this case, the printed circuit board 175 may be fixed to a side surface of the receiving groove 11 facing an inner side surface of the mode setting unit 110. By the switching circuit, the first and second terminals 121 and 123 are spaced apart from each other in the first position to block the power being applied to the controller, and are in contact with each other in the second position to apply the power to the controller.

According to an exemplary embodiment, the mode setting unit 110 may be illustrated in the form of a square shape, but not limited thereto. The mode setting unit 110 may be formed in various shapes such as a polygonal shape, a circular shape, an oval shape, etc. In this case, regardless of the shape, the mode setting unit 110 may have a structure in which the seesaw motion can be performed.

The speaker unit 130 may be electrically connected to the controller 170, and is driven and off by the controller 170.

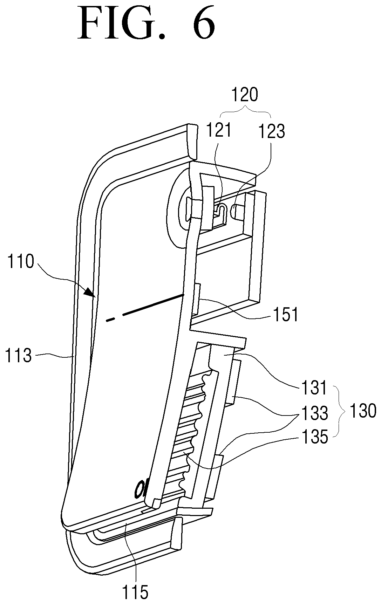

Referring to FIG. 6, according to an exemplary embodiment, the speaker unit 130 may have a predetermined thickness capable of being inserted inside the lower portion of the mode setting unit 110, and is provided with a frame 131 equipped with an elastic damper and a transducer. The speaker unit 130 may include a magnet 133 disposed on one side of the frame 131 and a vibration plate 135 disposed on the other side of the frame 131. In this case, the transducer may be disposed on or inside the vibration plate 135, and makes bending waves to proceed inside the vibration plate 135 so that the vibration plate 135 is resonated, and then sound is emitted. The vibration plate 135 may be disposed to face the inner side surface of the mode setting unit 110 so that the sound is emitted through the opening 115 of the mode setting unit 110.

Also, the speaker unit 130 is not limited to the above-described configuration. The speaker unit 130 may be formed as a dynamic type of speaker of which a voice coil is formed in a flat plate and having a thin thickness.

Thus, any one of various known flat type of speakers may be applied to the speaker unit 130 according to one or more exemplary embodiments.

The volume adjusting unit 150 includes a touch sensor 151 which may be disposed on the inner side surface of the mode setting unit 110 and is electrically connected to the controller. The touch sensor 151 may be disposed at a position corresponding to the third mark 117c. In this case, the volume adjusting unit 150 receives a volume signal by a touch-and-drag method. For example, when the user touches his or her finger on the third mark 117c and drags along the straight line toward the "+" side or the"-" side, a volume adjusting signal is inputted into the touch sensor 151, and the inputted volume adjusting signal is transmitted from the touch sensor 151 to the controller 170. The controller 170 compares the received volume adjusting signal with preset values, and controls the speaker unit 130 with a volume corresponding to a corresponding volume value.

The controller 170 may be electrically connected to a ROM 171 (or EEPROM), in which certain programs (codec for encoding/decoding audio data, etc) are stored, and a RAM 173 for storing data (e.g. audio data). The controller 170 plays back the audio data stored in the RAM 173 through the codec, and outputs it through the speaker unit 130.

Also, the controller 170 includes the printed circuit board 175 on which certain circuits (a power circuit, a switching circuit, an audio volume adjusting circuit, etc.) are formed. The printed circuit board 175 may be coupled to a power cable 177 connected to an external power source. When the power switch 120 is turned on (the second position), the printed circuit board 175 is supplied with the external power through the power cable 177. If the power is supplied to the printed circuit board 175, the controller 170 accesses the audio data stored in the RAM 173 by a predetermined program (if the audio data is compressed, the audio data may be processed by decoding), converts the audio data into analog signals, and outputs the analog signals to the speaker unit 130.

Furthermore, the controller 170 receives the volume adjusting signal through the touch sensor 151 of the volume adjusting unit 150, and controls the output of the speaker unit 130 with a corresponded volume value by comparing the volume adjusting signal with the prestored values.

Hereinafter, operation of the built-in audio apparatus 100 according to an exemplary embodiment configured as described above will be explained.

First, in the first position where the lower portion of the mode setting unit 110 is pressed and the upper portion of the mode setting unit 110 projects from the wall 10, because the first and second terminals 121 and 123 of the power switch 120 are spaced apart from each other, the power of the controller 170 is shut off so that the speaker unit 130 is not driven. In addition, the opening 115 of the mode setting unit 110 through which sound is outputted is concealed inside the wall 10.

On the contrary, in the second position where the upper portion of the mode setting unit 110 is pressed and the lower portion of the mode setting unit 110 projects from the wall 10, the first and second terminals 121 and 123 of the power switch 120 are interconnected so that the power is applied to the controller 170. At this time, the opening 115 of the mode setting unit 110 is exposed outside the wall 10 to emit the sound being outputted from the speaker unit 130.

Accordingly, the controller 170 accesses sound data stored in the RAM 173, converts the sound data into analog signals, and then outputs sound through the speaker unit 130. In this case, if a plurality of sound data is stored in the RAM 173, the sound data may be output in a preset playback order (random playback, sequential playback, etc.).

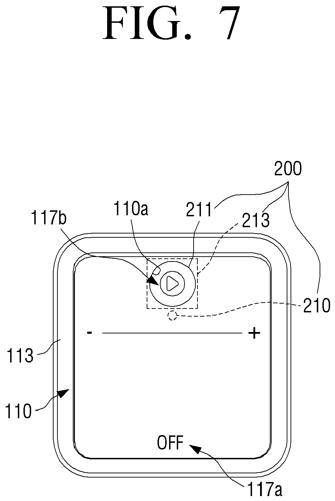

On the other hand, referring to FIG. 7, the built-in audio apparatus 100 according to an exemplary embodiment may further include a lighting unit 200 to tell the user whether audio is played back.

The lighting unit 200 may include a light source 210 disposed inside the mode setting unit 110, a window 211, and a light guide plate 213.

The light source 210 may be formed in a light emitting diode (LED) or a LED module including the LED. The light source 210 may be electrically connected to the controller 170, and is synchronized with the output of the speaker unit 130 by the controller 170. In other words, the light source 210 may be turned on while the audio data are being played back, and the light source 210 is turned off when the playback of the audio data is terminated. Moreover, the controller 170 may control the light source 210 to blink at predetermined intervals during playback of the audio data in addition to the simple on/off control.

The window 211 may be formed of a transparent or semitransparent material to radiate light emitted from the light source 210 outside the mode setting unit 110. In this case, the window 211 may be connected to a through hole 110a formed in a region corresponding to the second mark 117b of the mode setting unit 110. At this time, a figure representing a playback sign of the second mark 117b may be printed on the window 211.

The light guide plate 213 may be disposed inside the mode setting unit 110, and may be disposed at the same time adjacent to both the light source 210 and the window 211. The light emitted from the light source 210 may be transmitted through the light guide plate 213, and then may be effectively radiated through the window 211.

The same configuration as the lighting unit 200 may be applied to a region corresponding to the first mark 117a so that when the built-in audio apparatus 100 is in the first position, namely, when the built-in audio apparatus 100 is turned off, the region of the first mark 117a emits light to let the user know that the apparatus is an "off" state.

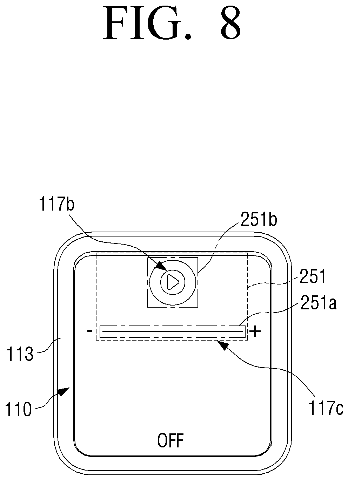

Also, in the built-in audio apparatus 100 according to an exemplary embodiment, as illustrated in FIG. 2, the touch sensor 151 of the volume adjusting unit 150 may be formed to have an area corresponding to the region of the third mark 117c, but is not limited thereto. As illustrated in FIG. 8, a touch sensor 251 may be formed to have width and length to the extent that the second mark 117b and the third mark 117c are included.

In this case, the touch sensor 251 may set a first area 251a and a second area 251b corresponding to each of the third mark 117c and the second mark 117b. The first area 251a may be defined as a region for the function of the third mark 117c, for example, adjusting a volume of the sound outputted from the speaker unit 130 by the touch-and-drag method as described above. The second area 251 b may be set as a region for the function of the second mark 117b, for example, playback of audio data by the touch method.

In this case, the second area 251 b may be formed to implement a pause function by an additional touch in the playback mode or a function to select and playback next audio data when being touch-and-dragged left or right by the touch-and-drag method.

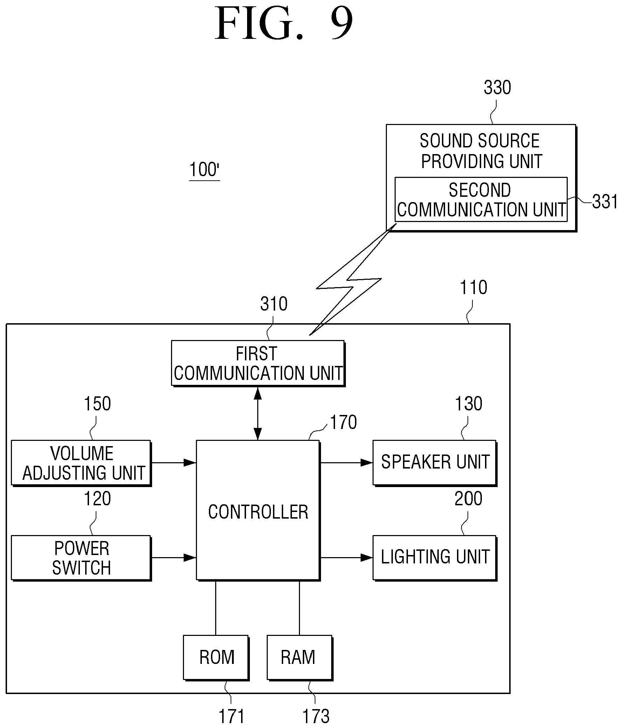

Referring to FIG. 9, a built-in audio apparatus 100' according to another exemplary embodiment is illustrated.

The built-in audio apparatus 100' according to another exemplary embodiment may receive audio data wirelessly from a separate sound source providing unit 330. In this case, a first communication unit 310 of the built-in audio apparatus 100' and a second communication unit 331 of the sound source providing unit 330 are communication modules which perform wireless communication with an external device located at close range, and may include, for example, Bluetooth, Zigbee, near field communication (NFC), etc. The first and second communication units 310 and 331 perform communication with each other according to a wireless communication protocol such as Wi-Fi, IEEE, etc. In addition, the first and second communication units 310 and 331 may perform communication by accessing the mobile communication network according to a variety of wide range mobile communication specifications such as third generation (3G), third generation partnership project (3GPP), long term evolution (LTE), etc.

Also, the built-in audio apparatus 100' according to another exemplary embodiment may output in real-time audio data provided from the sound source providing unit 330 by a real-time streaming protocol between the first and second communication units 310 and 331 through the speaker unit 130.

In this case, the first communication unit 310 is electrically connected to the controller 170, and may be disposed inside the mode setting unit 110 or in the receiving groove 11 of the wall 10. The controller 170 may store the audio data received from the first communication unit 310 in the RAM 173, or may temporarily store the audio data for buffering.

The sound source providing unit 330 may be made up of any one of mobile devices (e.g. smart phones, tablet computers, notebook computers, etc), desktop PCs, and data servers connected through the internet.

In FIG. 9, a power switch 120, a volume adjusting unit 150, a ROM 171, and a lighting unit 200 are also disclosed in the exemplary embodiment. These components may be the same as the configuration of the built-in audio apparatus 100 according to an exemplary embodiment as described above; therefore, detailed explanations thereof will be omitted.

In the above description, the built-in audio apparatuses 100 and 100' according to according to one or more exemplary embodiments may operate independently of any other device, but are not limited thereto. The built-in audio apparatuses 100 and 100' may be configured to interact with various lighting devices or other audio devices that are installed in home.

For example, the controller 170 of the built-in audio apparatuses 100 and 100' of the present disclosure may be electrically connected to a power unit or ballast of a home lighting device through certain electric wires. In this case, when the mode setting unit 110 is set to the first position, the speaker unit 130 of the built-in audio apparatus becomes off, and the home lighting device is turned off together. On the contrary, when the mode setting unit 110 is set to the second position, the speaker unit 130 of the built-in audio apparatus becomes on, and the home lighting device is turned on together. As described above, the built-in audio apparatus according to the present disclosure may control the home lighting device together according to the on/off mode.

Also, the controller 170 of the built-in audio apparatus 100 of the present disclosure may be electrically connected to a separate audio device or a speaker equipped with the separate audio device through a certain electric wire. Similar to the above-described example, where the built-in audio apparatus is connected to the home lighting device, as the mode setting unit 110 of the built-in audio apparatus is set to the first position or the second position, the built-in audio apparatus may turn off or output sound through the separate audio device or the speaker. In this case, the built-in audio apparatus according to the present disclosure may omit the speaker unit 130 equipped with itself.

Also, if a third communication unit that can communicate with the first communication unit 310 is installed in a separate audio device, the built-in audio apparatus 100' according to the present disclosure equipped with the first communication unit 310 can control the separate audio device through the controller 170.

Moreover, the built-in audio apparatus according to the present disclosure may be electrically connected to both the home lighting device and the separate audio device at the same time. In this case, as the mode setting unit 110 of the built-in audio apparatus is set to the first position or the second position, the built-in audio apparatus may control at the same time the lighting and sound through the home lighting device and the separate audio device.

## Claims

1. A built-in audio apparatus (100) comprising:
a speaker unit (130);
a mode setting unit (110) configured to selectively set the speaker unit to one of a first position or a second position;
a controller (170) configured to control the speaker unit depending on the setting of one of the first position and the second position; and
a volume adjusting unit (150) that is disposed inside the mode setting unit,
wherein the mode setting unit is configured to be disposed in a surface of a structure (10), and comprises an opening for emitting sound outputted from the speaker unit,
wherein the volume adjusting unit comprises a touch sensor (151) disposed on an inner surface of the mode setting unit.

2. The built-in audio apparatus of claim 1,
wherein the speaker unit is disposed inside the mode setting unit, and
wherein the speaker unit is configured to move the first position or the second position as the mode setting unit is rotated by a predetermined angle.

3. The built-in audio apparatus of claim 2,
wherein the mode setting unit comprises a power switch (120) configured to block power to the controller in the first position and apply power to the controller in the second position.

4. The built-in audio apparatus of claim 1,
wherein the opening is concealed within the structure in the first position and exposed outside the structure in the second position.

5. The built-in audio apparatus of claim 4, wherein the speaker unit is a flat-type speaker.

6. The built-in audio apparatus of claim 1,
wherein the mode setting unit further comprises a lighting unit (200) comprising;
a lighting source (210) that is disposed inside the mode setting unit and is electrically connected to the controller; and
a window (211) that is connected to the mode setting unit and is formed of a transparent or semitransparent material configured to radiate light emitted from the lighting source.

7. The built-in audio apparatus of claim 6, wherein the lighting unit further comprises a light guide plate (213) that is disposed adjacent to the lighting source inside the mode setting unit, and is configured to guide the light emitted from the lighting source to the window.

8. The built-in audio apparatus of claim 6, wherein the controller is configured to drive the lighting source in the first position and the second position to emit light.

9. The built-in audio apparatus of claim 2, wherein the controller is electrically connected to a first communication unit (310),
wherein the first communication unit is configured to communicate with a second communication unit (331) of a sound source providing unit (330) storing audio data,
wherein the sound source providing unit is configured to transmit the audio data, using the second communication unit, to the first communication unit in response to a request by the controller, and
wherein the controller is configured to output the audio data received through the first communication unit using the speaker unit.

10. The built-in audio apparatus of claim 9, wherein
the first communication unit and the second communication unit are configured to transmit wireless signals to and receive wireless signals from each other.

11. The built-in audio apparatus of claim 1, wherein the controller is configured to be electrically connected to a lighting device inside a building, and
wherein the controller is configured to turn on or off the lighting device along with the speaker unit depending on whether the mode setting unit is in the first position or the second position, respectively.

12. The built-in audio apparatus of claim 1, further comprising:
wherein the controller is electrically connected to a separate speaker spaced at a distance from the built-in audio apparatus, and
wherein the controller is configured to output sound through the separate speaker depending on whether the mode setting unit is in the second position.

## Patentansprüche

1. Eingebautes Audiogerät (100), umfassend:
eine Lautsprechereinheit (130);
eine Moduseinstelleinheit (110), die konfiguriert ist, um die Lautsprechereinheit selektiv auf eine erste Position oder eine zweite Position einzustellen;
eine Steuerung (170), die konfiguriert ist, um die Lautsprechereinheit in Abhängigkeit von der Einstellung der ersten Position oder der zweiten Position zu steuern; und
eine Volumeneinstelleinheit (150), die innerhalb der Moduseinstelleinheit angeordnet ist,
wobei die Moduseinstelleinheit konfiguriert ist, um in einer Oberfläche einer Struktur (10) angeordnet zu werden, und eine Öffnung zum Aussenden von Ton umfasst, der von der Lautsprechereinheit ausgegeben wird,
wobei die Volumeneinstelleinheit einen Berührungssensor (151) umfasst, der auf einer Innenfläche der Moduseinstelleinheit angeordnet ist.

2. Eingebautes Audiogerät nach Anspruch 1,
wobei die Lautsprechereinheit innerhalb der Moduseinstelleinheit angeordnet ist, und
wobei die Lautsprechereinheit konfiguriert ist, um die erste Position oder die zweite Position zu bewegen, wenn die Moduseinstelleinheit um einen vorbestimmten Winkel gedreht wird.

3. Eingebautes Audiogerät nach Anspruch 2,
wobei die Moduseinstelleinheit einen Leistungsschalter (120) umfasst, der konfiguriert ist, um die Leistungszufuhr zu der Steuerung in der ersten Position zu sperren und der Steuerung in der zweiten Position Leistung zuzuführen.

4. Eingebautes Audiogerät nach Anspruch 1,
wobei die Öffnung in der ersten Position innerhalb der Struktur verborgen ist und in der zweiten Position außerhalb der Struktur freiliegt.

5. Eingebautes Audiogerät nach Anspruch 4, wobei die Lautsprechereinheit ein flacher Lautsprecher ist.

6. Eingebautes Audiogerät nach Anspruch 1,
wobei die Moduseinstelleinheit ferner eine Beleuchtungseinheit (200) umfasst, die umfasst:
eine Lichtquelle (210), die innerhalb der Moduseinstelleinheit angeordnet ist und elektrisch mit der Steuerung verbunden ist; und
ein Fenster (211), das mit der Moduseinstelleinheit verbunden ist und aus einem transparenten oder halbtransparenten Material besteht, das konfiguriert ist, um von der Lichtquelle emittiertes Licht auszustrahlen.

7. Eingebautes Audiogerät nach Anspruch 6, wobei die Beleuchtungseinheit ferner eine Lichtleiterplatte (213) umfasst, die benachbart zu der Lichtquelle innerhalb der Moduseinstelleinheit angeordnet ist und konfiguriert ist, um das von der Lichtquelle emittierte Licht zu dem Fenster zu leiten.

8. Eingebautes Audiogerät nach Anspruch 6, wobei die Steuerung konfiguriert ist, um die Lichtquelle in die erste Position und die zweite Position zu versetzen, um Licht zu emittieren.

9. Eingebautes Audiogerät nach Anspruch 2, wobei die Steuerung mit einer ersten Kommunikationseinheit (310) elektrisch verbunden ist,
wobei die erste Kommunikationseinheit konfiguriert ist, um mit einer zweiten Kommunikationseinheit (331) einer Tonquellen-Bereitstellungseinheit (330) zu kommunizieren, die Audiodaten speichert,
wobei die Tonquellen-Bereitstellungseinheit konfiguriert ist, um die Audiodaten unter Verwendung der zweiten Kommunikationseinheit an die erste Kommunikationseinheit in Reaktion auf eine Anforderung durch die Steuerung zu übertragen, und
wobei die Steuerung konfiguriert ist, um die durch die erste Kommunikationseinheit empfangenen Audiodaten unter Verwendung der Lautsprechereinheit auszugeben.

10. Eingebautes Audiogerät nach Anspruch 9, wobei
die erste Kommunikationseinheit und die zweite Kommunikationseinheit konfiguriert sind, um drahtlose Signale zu übertragen und drahtlose Signale voneinander zu empfangen.

11. Eingebautes Audiogerät nach Anspruch 1, wobei die Steuerung konfiguriert ist, um mit einer Beleuchtungsvorrichtung innerhalb eines Gebäudes elektrisch verbunden zu werden, und
wobei die Steuerung konfiguriert ist, um die Beleuchtungsvorrichtung zusammen mit der Lautsprechereinheit in Abhängigkeit davon ein- oder auszuschalten, ob sich die Moduseinstelleinheit jeweils in der ersten Position oder der zweiten Position befindet.

12. Eingebautes Audiogerät nach Anspruch 1, ferner umfassend:
wobei die Steuerung elektrisch mit einem separaten Lautsprecher verbunden ist, der in einer Entfernung zu dem eingebauten Audiogerät beabstandet ist, und
wobei die Steuerung konfiguriert ist, um Ton über den separaten Lautsprecher in Abhängigkeit davon auszugeben, ob sich die Moduseinstelleinheit in der zweiten Position befindet.

## Revendications

1. Appareil audio intégré (100), comprenant :
une unité à haut-parleur (130) ;
une unité de réglage de mode (110) configurée pour sélectivement régler l'unité à haut-parleur à l'une parmi une première position ou une seconde position ;
une unité de commande (170) configurée pour commander l'unité à haut-parleur en fonction du réglage d'une parmi la première position et la seconde position ; et
une unité d'ajustement de volume (150) qui est disposée à l'intérieur de l'unité de réglage de mode,
dans lequel l'unité de réglage de mode est configurée pour être disposée dans une surface d'une structure (10), et comprend une ouverture pour émettre un son produit en sortie à partir de l'unité à haut-parleur,
dans lequel l'unité d'ajustement de volume comprend un capteur tactile (151) disposé sur une surface intérieure de l'unité de réglage de mode.

2. Appareil audio intégré selon la revendication 1,
dans lequel l'unité à haut-parleur est disposée à l'intérieur de l'unité de réglage de mode, et
dans lequel l'unité à haut-parleur est configurée pour déplacer la première position ou la seconde position lorsque l'unité de réglage de mode est tournée d'un angle prédéterminé.

3. Appareil audio intégré selon la revendication 2,
dans lequel l'unité de réglage de mode comprend un interrupteur électrique (120) configuré pour bloquer de l'électricité vers l'unité de commande dans la première position et appliquer de l'électricité sur l'unité de commande dans la seconde position.

4. Appareil audio intégré selon la revendication 1,
dans lequel l'ouverture est cachée à l'intérieur de la structure dans la première position et exposée à l'extérieur de la structure dans la seconde position.

5. Appareil audio intégré selon la revendication 4, dans lequel l'unité à haut-parleur est un haut-parleur de type plat.

6. Appareil audio intégré selon la revendication 1,
dans lequel l'unité de réglage de mode comprend en outre une unité d'éclairage (200) comprenant :
une source d'éclairage (210) qui est disposée à l'intérieur de l'unité de réglage de mode et est électriquement connectée à l'unité de commande ; et
une fenêtre (211) qui est raccordée à l'unité de réglage de mode et est formée d'un matériau transparent ou semi-transparent configuré pour faire rayonner de la lumière émise à partir de la source d'éclairage.

7. Appareil audio intégré selon la revendication 6, dans lequel l'unité d'éclairage comprend en outre une plaque guide de lumière (213) qui est disposée de façon adjacente à la source d'éclairage à l'intérieur de l'unité de réglage de mode, et est configurée pour guider la lumière émise de la source d'éclairage vers la fenêtre.

8. Appareil audio intégré selon la revendication 6, dans lequel l'unité de commande est configurée pour entraîner la source d'éclairage dans la première position et la seconde position pour émettre de la lumière.

9. Appareil audio intégré selon la revendication 2, dans lequel l'unité de commande est électriquement connectée à une première unité de communication (310),
dans lequel la première unité de communication est configurée pour communiquer avec une seconde unité de communication (331) d'une unité de fourniture de source sonore (330) stockant des données audio,
dans lequel l'unité de fourniture de source sonore est configurée pour transmettre les données audio, en utilisant la seconde unité de communication, à la première unité de communication en réponse à une demande par l'unité de commande, et
dans lequel l'unité de commande est configurée pour produire en sortie les données audio reçues par l'intermédiaire de la première unité de communication en utilisant l'unité à haut-parleur.

10. Appareil audio intégré selon la revendication 9, dans lequel
la première unité de communication et la seconde unité de communication sont configurées pour transmettre des signaux sans fil l'une à l'autre et recevoir des signaux sans fil l'une de l'autre.

11. Appareil audio intégré selon la revendication 1, dans lequel l'unité de commande est configurée pour être électriquement connectée à un dispositif d'éclairage à l'intérieur d'un bâtiment, et
dans lequel l'unité de commande est configurée pour allumer ou éteindre le dispositif d'éclairage conjointement avec l'unité à haut-parleur en fonction du fait que l'unité de réglage de mode est dans la première position ou la seconde position, respectivement.

12. Appareil audio intégré selon la revendication 1, comprenant en outre :
dans lequel l'unité de commande est électriquement connectée à un haut-parleur séparé espacé, à une distance, de l'appareil audio intégré, et
dans lequel l'unité de commande est configurée pour produire en sortie un son par l'intermédiaire du haut-parleur séparé en fonction du fait que l'unité de réglage de mode est dans la seconde position.
